# EUROPEAN PATENT APPLICATION

(11) **EP 4 507 118 A1**
(43) Date of publication of application: **12.02.2025**
(21) Application number: 23784907.0
(22) Date of filing: 29.03.2023
(51) Int. Cl.: H01M 50/595, H01M 50/586, H01M 50/531, H01M 50/557, B65H 19/18

(54) **FILM ATTACHMENT DEVICE FOR BATTERY CELL**

(30) Priority: 05.04.2022 KR 20220042426
(71) Applicant: SK On Co., Ltd., Seoul 03161 (KR); Hana Technology Co., Ltd., Gyeonggi-do 17118 (KR)
(72) Inventor: AHN, Ji-Eun, Daejeon 34124 (KR); PARK, Sang-Jun, Daejeon 34124 (KR); OH, Young-Rae, Daejeon 34124 (KR); KIM, Kang-San, Daejeon 34124 (KR); RYU, Jae-Min, Daejeon 34124 (KR); LEE, Ho-Jeong, Yongin-si, Gyeonggi-do 17118 (KR); JEONG, Jeong-Seok, Yongin-si, Gyeonggi-do 17118 (KR)
(74) Representative: Stolmár & Partner Patentanwälte PartG mbB
(86) International application number: PCT/KR2023/004198
(87) International publication number: WO 2023/195680

(57) **Abstract**

A film attachment device according to an embodiment of the present invention may comprise: a tape supply part for selectively supplying a first tape provided on a first supply roll and a second tape provided on a second supply roll; a tape cutting part for cutting the first tape or the second tape to a certain size; a film attachment part for attaching, to a battery cell, a protective film formed by cutting the first tape or the second tape; and a tape connection part for connecting the first tape and the second tape if one from among the first tape and the second tape is used up.

## Description

### Technical Field

The present disclosure relates to an apparatus for attaching a protective film to a weld zone of an electrode lead and an electrode tab during a battery cell manufacturing process.

### Background Art

Unlike primary batteries, battery cells may be charged and discharged, so the battery cells may be applied to devices within various fields such as digital cameras, mobile phones, laptops, hybrid cars, and electric vehicles. Recently, among battery cells, much research is being conducted on lithium battery cells with high energy density and discharge voltage.

Generally, lithium battery cells are manufactured as pouch-type battery cells having flexibility, or as prismatic battery cells or cylindrical can-type battery cells having rigidity.

Double pouch-type battery cells have a protective film attached to a portion in which an electrode lead and an electrode tab are welded to each other. The protective film is provided to prevent an exterior material from being damaged due to burrs, generated in the welded portion.

Accordingly, the present disclosure proposes an apparatus and method that can more easily attach a protective film to the welded portion during the battery cell manufacturing process.

### Summary of Invention

### Technical Problem

An aspect of the present disclosure is to provide a film attaching apparatus that can easily attach a protective film to a battery cell.

### Solution to Problem

According to an aspect of the present disclosure, a film attaching apparatus may include: a tape supply portion selectively supplying first tape provided on a first supply roll and second tape provided on a second supply roll; a tape cutting portion cutting the first tape or the second tape to a predetermined size; a film attaching portion attaching a protective film formed by cutting the first tape or the second tape to a battery cell; and a tape connection portion connecting the first tape and the second tape, when one of the first tape and the second tape is exhausted.

In an embodiment of the present disclosure, the tape connection portion may include a first support portion and a second support portion disposed to be spaced apart from each other by a predetermined distance, the first tape and the second tape may be disposed to pass between the first support portion and the second support portion, and when the first tape is exhausted, the first support portion and the second support portion may move in a direction toward each other, to bond the first tape and the second tape to each other.

In an embodiment of the present disclosure, when the first tape and the second tape are bonded to each other, a cutter cutting the exhausted tape of the first tape and the second tape may be further included.

In an embodiment of the present disclosure, a plurality of guide rollers supporting the first tape or the second tape and maintaining tension of the first tape or the second tape may be further included.

In an embodiment of the present disclosure, a sensor sensing a remaining amount of the first tape on the first supply roll may be further included.

In an embodiment of the present disclosure, the tape connection portion may be disposed between the tape supply portion and the tape cutting portion.

In an embodiment of the present disclosure, the tape cutting portion may include a fixing device supporting the tape supplied from the tape supply portion, a fixing moving portion disposed to enable linear movement toward the fixing device and pulling out the tape disposed on the fixing device to the outside of the fixing device by a predetermined distance, and a cutter disposed between the fixing device and the fixing moving portion to cut the tape.

In an embodiment of the present disclosure, when the tape is pulled out by a predetermined distance by the fixing moving portion, the fixing device may press the tape to suppress the movement of the tape.

In an embodiment of the present disclosure, the fixing moving portion may include a gripping unit formed in a pincer shape and gripping the tape.

In an embodiment of the present disclosure, the film attaching portion may include an adsorption portion adsorbing the protective film to attach the protective film to the battery cell, and a transfer portion disposing the adsorption portion between the fixing device and the fixing moving portion and disposing the adsorption portion to face the battery cell.

In an embodiment of the present disclosure, the adsorption portion may include a first adsorption portion and a second adsorption portion, disposed to be spaced apart from each other by a predetermined distance, and when the first adsorption portion is disposed between the fixing device and the fixing moving portion, the transfer portion may dispose the second adsorption portion to face the battery cell.

In an embodiment of the present disclosure, when the first adsorption portion adsorbs the protective film, the second adsorption portion may attach the pre-adsorbed protective film to the battery cell.

### Advantageous Effects of Invention

As set forth above, according to an embodiment of the present disclosure, when a tape supplied from a supply roll is exhausted, a film attaching apparatus does not need to stop a film attachment process to replace the supply roll, so manufacturing time may be reduced and process efficiency may be improved.

### Brief description of drawings

FIG. 1 is a diagram schematically illustrating a film attaching apparatus according to an embodiment of the present disclosure.
FIGS. 2A to 2D are diagrams illustrating an operation of the tape connection portion shown in FIG. 1.
FIGS. 3A to 3D are diagrams illustrating an operation of the tape cutting portion shown in FIG. 1.
FIG. 4 is a perspective view specifically illustrating the film attaching portion shown in FIG. 1.

### Best Mode for Invention

Hereinafter, preferred embodiments of the present disclosure will be described in detail with reference to the attached drawings. In this case, detailed descriptions of well-known functions and configurations that may obscure the gist of the present disclosure may be omitted in the attached drawings. In addition, in the accompanying drawings, some components are exaggerated, omitted, or schematically shown, and the size of each component does not entirely reflect the actual size.

In addition, in the embodiment of the present disclosure, expressions such as upper, lower, lower, and side are explained based on the drawings, and may be expressed differently when the direction of the object in question changes.

In addition, the battery cell described below may be a lithium secondary battery, and the description will be based on a pouch-type battery cell having an exterior material having flexibility. However, the configuration of the present disclosure is not limited thereto.

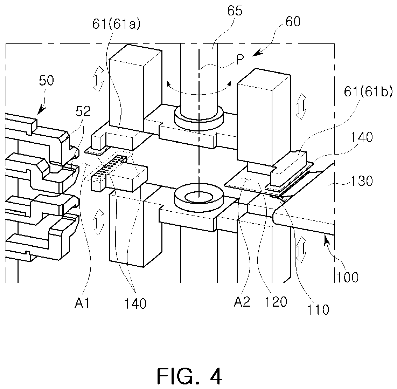

In addition, in the following description, the battery cell 100 is in a manufacturing state rather than a completed state, which may mean a state in which an electrode 120 is welded to an electrode tab 110 of the electrode assembly 130 as shown in FIG. 4.

The present disclosure relates to a film attaching apparatus automatically attaching a protective film 140 to a welded portion (hereinafter, referred to as a weld zone) in which the electrode lead (120 in FIG. 4) and the electrode tab 110 are welded to each other.

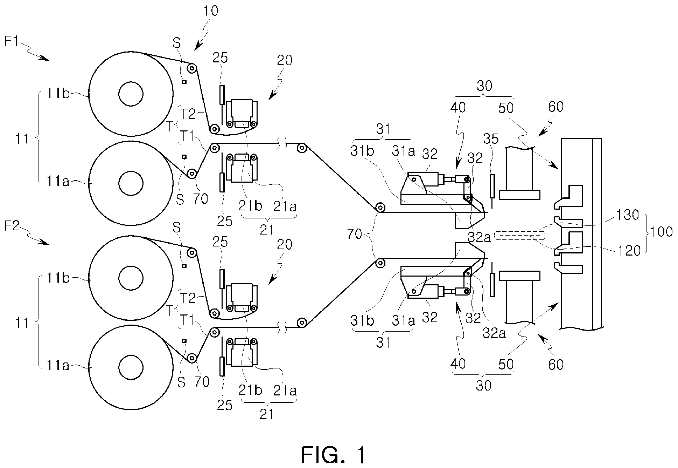

FIG. 1 is a diagram schematically illustrating a film attaching apparatus according to an embodiment of the present disclosure.

Referring to FIG. 1, a film attaching apparatus 1 of the present embodiment may include a tape supply portion 10, a tape connection portion 20, a guide roller 70, a tape cutting portion 30, and a film attaching portion 60. In addition, the film attaching apparatus 1 may further include a control unit (not shown) controlling operations of respective components.

The film attaching apparatus 1 of the present embodiment may include a first attaching portion F1 attaching a protective film (140 in FIG. 4) to one surface of the battery cell 100 and a second attaching portion F2 attaching the protective film 140 to the other surface of the battery cell 100. Here, one surface and the other surface of the battery cell 100 may refer to both surfaces of a portion (hereinafter, a weld zone) in which the electrode tab (110 in FIG. 4) and the electrode lead (120 in FIG. 4) are welded.

The first attaching portion F1 and the second attaching portion F2 may be similarly configured and may be disposed to be symmetrical to each other with respect to the battery cell 100.

In addition, the first attaching portion F1 and the second attaching portion F2 may include a tape supply portion 10, a tape connection portion 20, a guide roller 70, a tape cutting portion 30, and a film attaching portion 60, and may operate in substantially the same manner.

Therefore, hereinafter, for convenience of explanation, the description will be provided based on the first attaching portion F1, and only portions that are different from the first attaching portion F1 will be described regarding the second attaching portion F2.

The tape supply portion 10 supplies a protective film 140 in the form of a tape to the battery cell 100.

The film attaching apparatus 1 of the present embodiment may attach the protective film 140 to both surfaces of the weld zone, respectively. To this end, the tape supply portion 10 can simultaneously supply the protective film 140 to both surfaces of the electrode lead.

The tape supply portion 10 may include a plurality of supply rolls 11. The supply roll 11 may be provided with a protective film 140 wound on a reel in the form of a tape.

The tape supply unit 10 may include at least two supply rolls 11a and 11b. Therefore, considering the second attaching portion F2, in the present embodiment, at least four supply rolls 11 may be provided, and the four supply rolls 11 may be disposed to be spaced apart from each other by a predetermined distance.

In the present embodiment, the tape supply portion 10 may include a first supply roll 11a and a second supply roll 11b. One of the first supply roll 11a and the second supply roll 11b may supply a protective film 140 toward the battery cell 10. Another thereof may be preliminarily prepared. For example, in the process of supplying the protective film 140 from one supply roll (e.g., the first supply roll, 11a) to the battery cell 100, if the protective film 140 of the supply roll 11a is exhausted, the supply of the protective film 140 can be prevented from being interrupted by supplying the protective film 140 from the another supply roll (e.g., the second supply roll, 11b) toward the battery cell 100.

Hereinafter, the protective film 140 continuously supplied from the supply roll 11 is referred to as a tape (T), and a member obtained by cutting the tape T to a size that may be attached to the battery cell 100 is referred to as a protective film 140. In addition, the protective film 140 supplied from the first supply roll 11a is referred to as first tape T1, and the protective film 140 supplied from the second supply roll 11b is referred to as second tape T2.

In the film attaching apparatus 1 of the present embodiment, when the first supply roll 11a supplies the first tape T1 to the battery cell 100, the second supply roll 11b does not operate. When the first tape T1 of the first supply roll 11a is exhausted, the second tape T2 of the second supply roll 11b is connected to the first tape T1 of the first supply roll 11a, and then, the second tape T2 can be supplied to the battery cell 100 from the second supply roll 11b.

At least one sensor S may be disposed in a position adjacent to the supply roll 11. The sensor S may determine a remaining amount of the tape T wound on each supply roll 11. For example, the sensor S may determine the remaining amount of tape T based on the number of rotations of the supply roll 11 or a change in a distance from the tape T remaining on the supply roll 11. A laser sensor may be used as the sensor S, but the configuration of the present disclosure is not limited thereto.

The sensor S may be provided on a side of the first supply roll 11a and on a side of the second supply roll 11b, respectively. Accordingly, the control unit (not shown) of the film attaching apparatus 1 may determine whether the first tape T1 supplied from the first supply roll 11a is exhausted through the sensor S, and when it is determined that the first tape T1 is exhausted, the control unit may drive a tape connection portion 20 to attach the second tape T2 of the second supply roll 11b to the first tape T1.

Likewise, the control unit (not shown) may determine that the second tape T2 supplied from the second supply roll 11b is exhausted through the sensor S, and when it is determined that the second tape T2 is exhausted, the control unit may drive the tape connection portion 20 to attach the first tape T1 of the first supply roll 11a to the second tape T2.

The guide roller 70 may be disposed along a travelling path of the tape T supplied from the supply roll 11 to support the tape T. To this end, a plurality of guide rollers 70 may be provided. For example, the plurality of guide rollers 70 may be disposed along a movement path of the tape T formed between the supply roll 11 and the battery cell 100

Accordingly, tension of the tape T supplied from the supply roll 11 to the battery cell 100 may be maintained constant by the guide rollers 70, or the tape T may support the guide rollers 70 and the travelling direction of the tape T may be changed.

The tape connection portion 20 may connect the first tape T1 and the second tape T2 to each other. To this end, the tape connection portion 20 may include a support portion 21 and a first cutter 25.

The support portion 21 may support the tapes T1 and T2 supplied through the supply roll 11.

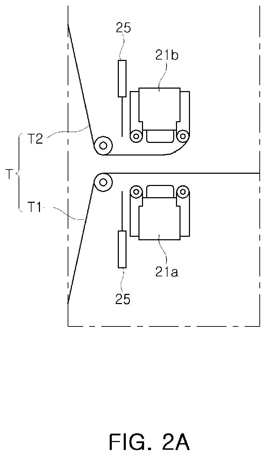

FIGS. 2A to 2D are diagrams illustrating the operation of the tape connection portion shown in FIG. 1.

Referring to FIGS. 2A to 2D together, the support portion 21 may be disposed in? a position spaced apart from the supply roll 11 by a predetermined distance, and may be configured so that a first support portion 21a supporting the first tape T1 and a second support portion 21b supporting the second tape T2 form a pair.

As shown in FIG. 2A, the first support portion 21a and the second support portion 21b may be disposed to be spaced apart from each other by a predetermined distance, and surfaces thereof facing the tape T may be disposed to face each other.

First tape T1 may be supported on a surface of the first support portion 21a facing the second support portion 21b. Second tape T2 may be supported on a surface of the second support portion 21b facing the first support portion 21a. Accordingly, at least a portion of the first tape T1 and the second tape T2 may be disposed to face each other between the first support portion 21a and the second support portion 21b.

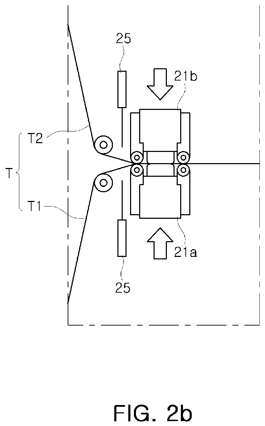

As shown in FIG. 2B, the first support portion 21a and the second support portion 21b may move in a direction toward each other so that the first tape T1 and the second tape T2 may contact each other. For example, at least one of the first support portion 21a and the second support portion 21b may be connected to a driving means and configured to enable linear movement in a direction toward each other. A linear motor or a hydraulic cylinder may be used as the above-described driving means, but there is no limitation thereto.

As the first tape T1 and the second tape T2 contact each other, the first tape T1 and the second tape T2 may be bonded to each other.

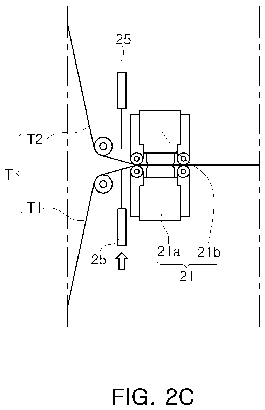

When the first tape T1 and the second tape T2 are bonded to each other, a process of separating the exhausted tape from the supply roll 11 using the first cutter 25 is performed, as shown in FIG. 2C.

The first cutter 25 may be disposed between the support portion 21 and the supply roll 11 and can cut the tape T disposed between the tape supply portion 10 and the tape connection portion 20.

For example, in the film attaching apparatus 1 of the present embodiment, when the first tape T1 is exhausted in the process of supplying the first tape T1 to the battery cell 100, a process of attaching second tape T2 to the first tape T1 through the support portion 21, and a process of cutting the first tape T1 using the first cutter 25 may be performed sequentially. Likewise, when the second tape T2 is exhausted in the process of supplying the second tape T2 to the battery cell 100, a process of attaching the first tape T1 to the second tape T2 through the support portion 21, and a process of cutting the second tape T2 using the first cutter 25 may be performed sequentially.

Therefore, the first cutter 25 may be respectively disposed between the first supply roll 11a and the first support portion 21a and between the second supply roll 11b and the second support portion 21b, and may be configured to selectively cut the first tape T1 and the second tape.

For cutting the tape T, the first cutter 25 may be configured to move linearly. For example, the first cutter 25 is disposed in a position spaced apart from the tape T by a predetermined distance, and move linearly toward the tape T and cut the tape T. When cutting is completed, the first cutter 25 can be returned to the original position thereof. To this end, the first cutter 25 may also be connected to a separate driving means and configured to move linearly by a predetermined distance.

In the present embodiment, the first cutter 25 moves in a thickness direction of the tape T and cuts the tape T. However, the configuration of the present disclosure is not limited thereto. For example, the first cutter 25 may be configured to cut the tape T by moving in the width direction of the tape T.

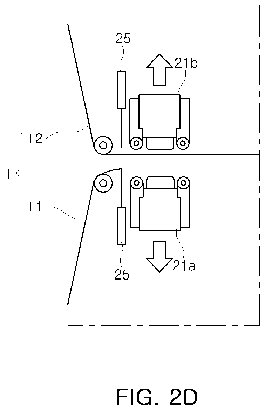

When the tape T is cut by the first cutter 25, as shown in FIG. 2D, the first support portion 21a and the second support portion 21b can move in a direction, away from each other again and return to the original position thereof.

Thereafter, the second tape T2 may be supplied to the battery cell 100, and the operator can replace the first supply roll 11a with a new supply roll 11 while the second tape T2 is supplied.

Through this configuration, when the tape T supplied from the supply roll 11 is exhausted, the film attaching apparatus 1 of the present embodiment does not need to stop the film attachment process to replace the supply roll 11, so manufacturing time may be minimized and process efficiency may be improved.

The tape T supplied from the tape supply portion 10 may pass through the tape connection portion 20 and be disposed in the tape cutting portion 30.

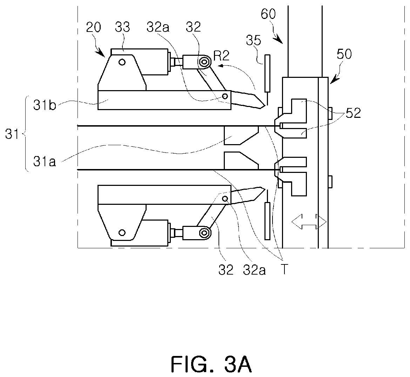

FIGS. 3A to 3D are diagrams illustrating the operation of the tape cutting portion shown in FIG. 1.

Referring to FIGS. 3A to 3D together, a tape T may be cut in the tape cutting portion 30 to a size to be attached to the battery cell 100. To this end, the tape cutting portion 30 may include a fixing device 40, a fixing moving portion 50, and a second cutter 35.

The fixing device 40 may suppress the movement of the tape T by pressing the tape T. To this end, the fixing device 40 of the present embodiment may include a fixing base 31, a rotation pressing portion 32, and a rotation driving portion 33.

The fixing base 31 may be fixed within the film attaching apparatus 1, and may include a first base 31a disposed to face a first surface of the tape T, and a second base 31b disposed to face a second surface of the tape T. Here, the second surface of the tape T refers to an opposite surface of the first surface.

The first base 31a may have a seating surface on which the tape T is seated. Accordingly, the seating surface may be formed to be substantially flat and disposed to support the first surface of the tape T.

The second base 31b may be disposed to face the second surface of the tape T, and may be spaced apart from the tape T by a predetermined distance. The rotation pressing portion 32 may be rotatably coupled to the second base 31b.

The rotation pressing portion 32 may be disposed to face the second surface of the tape T, and may be rotatably coupled to the second base 31b. The rotation pressing portion 32 may be hingedly coupled to the second base 31b, and may be connected to the rotation driving portion 33 to rotate in a first direction R1 or a second direction R2 by driving the rotation driving portion 33.

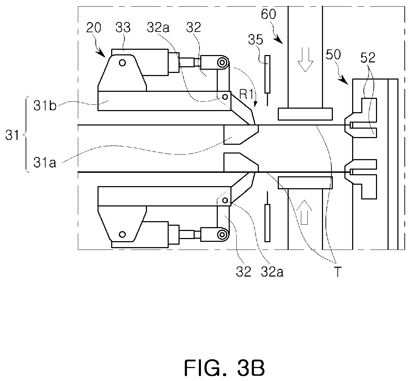

As shown in FIG. 3B, when the rotation pressing portion 32 rotates in the first direction R1, one end of the rotation pressing portion 32 may contact the tape T to press the tape T toward the first base 31a. In this case, the movement of the tape T may be suppressed. As shown in FIG. 3A, when the rotation pressing portion 32 rotates in the second direction (R2, a direction opposite to the first direction), one end of the rotation pressing portion 32 may be spaced apart from the tape T, as shown in FIG. 3A.

The rotation driving portion 33 may be fixedly fastened to the second base 31b, and may be configured to allow at least a portion of the rotation driving portion 33 to move linearly in a reciprocating manner, such as a linear motor or a hydraulic cylinder member. In addition, the other end of the rotation pressing portion 32 may be rotatably coupled to a portion of the rotation driving portion 33, which moves linearly.

A rotation axis 32a of the rotation pressing portion 32 may be disposed between one end and the other end of the rotation pressing portion 32. Accordingly, one end of the rotation pressing portion 32 may be rotated in the first direction R1 or the second direction R2 in response to the linear movement of the rotation driving portion 33.

However, the configuration of the present disclosure is not limited thereto, and it is also possible to configure the rotation driving portion 33 as a rotation device such as a motor. In this case, the rotation axis 32a of the rotation driving portion 33 can be used as a rotation axis of the rotation pressing portion 32.

The fixing moving portion 50 may pull the tape T located in the tape cutting unit 30 out of the tape cutting portion 30 by a predetermined length. To this end, at least a portion of the fixing moving portion 50 may be disposed to enable reciprocating movement in a pulling direction of the tape T. For example, the fixing moving portion 50 may be coupled to a moving rail and configured to enable linear movement according to the operation of the driving means.

The fixing moving portion 50 may be provided with a gripping unit 52 gripping an end of the tape T. The gripping unit 52 may be formed in the shape of pincers to simultaneously press upper and lower surfaces of the end of the tape T1 and grip the tape T. In this process, the gripping unit 52 may adsorb the tape T and grip the tape T, but the configuration of the present disclosure is not limited thereto.

As shown in FIG. 3A, when the gripping unit 52 grips the end of the tape T, the gripping unit 52 may move in a direction, away from the fixing device 40, as shown in FIG. 3B, the tape T may be pulled out of the fixing device 40.

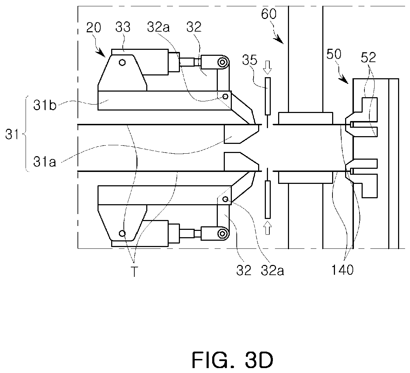

The second cutter 35 may cut the tape T pulled out of the fixing device 40. As shown in FIG. 3D, the second cutter 35 may be disposed between the fixing device 40 and the fixing moving portion 50 and may cut the tape T located between the fixing device 40 and the fixing moving portion 50.

When the tape T is pulled out of the fixing device 40 by a predetermined length (a length of the protective film 140), the film attaching apparatus 1 of the present embodiment may be configured so that the second cutter 35 cuts the tape T. To this end, the second cutter 35 may be disposed in a position adjacent to the fixing device 40, and may be configured to be connected to a separate driving means to move linearly by a predetermined distance.

In the present embodiment, the second cutter 35 moves in a thickness direction of the tape T to cut the tape T. However, the configuration of the present disclosure is not limited thereto. For example, the second cutter 35 may be configured to move in a width direction of the tape T and cut the tape T.

Subsequently, a process of cutting the tape T through the tape cutting portion 30 will be described in more detail.

First, as shown in FIG. 1, when the tape T is disposed on the fixing device 40, as shown in FIG. 3A, the fixing moving portion 50 moves toward the fixing device 40 to grip the end of the tape T, and then returns to the original position thereof, as shown in FIG. 3B. Accordingly, the tape T is pulled out from the fixing device 40 and disposed in a region between the fixing device 40 and the fixing moving portion 50. In this process, the rotation pressing portion 32 may maintain an end thereof spaced apart from the tape T, as shown in FIG. 3A.

Subsequently, the rotation driving portion 33 rotates the rotation pressing portion 32 in the first direction. Accordingly, as shown in FIG. 3B, the end of the rotation pressing portion 32 presses the tape T toward a first base 31a and fixes the tape to the first base 31a.

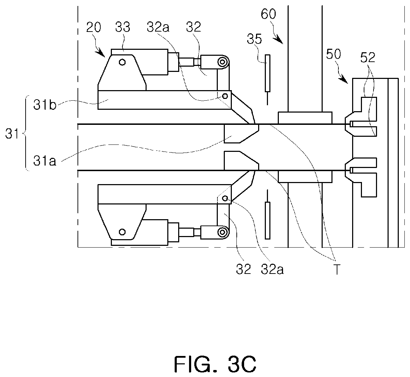

Subsequently, as shown in FIG. 3C, when a film attaching portion to be described later adsorbs the tape T, a process in which the second cutter 35 cuts the tape T may be performed, as shown in FIG. 3D.

In this process, since the rotation pressing portion 32 continuously presses the tape T, it is possible to prevent the tape T from moving or being additionally pulled out in the process of cutting the tape T. In addition, after the tape T is cut, it is also possible to prevent the end of the tape T disposed on the first base 31a from being rolled into the tape connection portion 20.

The tape T, cut by the second cutter 35, that is, the protective film 140, may be attached to the battery cell 100 through the film attaching portion 60.

The film attaching portion 60 may adsorb the protective film 140 located between the fixing device 40 and the fixed moving portion 50, transfer the same toward the battery cell 100, and then attach the same to the battery cell 100.

FIG. 4 is a perspective view specifically illustrating film attaching portion shown in FIG. 1.

Referring to FIG. 4 together, the film attaching portion 60 of the present embodiment may include an adsorption portion 61 and a transfer portion 65.

The adsorption portion 61 may be disposed between the fixing device 40 and the fixing moving portion 50 (A1, hereinafter, referred to as an adsorption area to adsorb the protective film 140, and then move to an area (A2, hereinafter, referred to as an attachment area) in which the battery cell 100 is disposed and attach the adsorbed protective film 140 to the battery cell 100. To this end, the adsorption portion 61 may be provided with a plurality of suction ports on a surface thereof adsorbing the protective film 140.

The adsorption area A1 and the attachment area A2 may be disposed to be spaced apart from each other by a predetermined distance, and the adsorption portion 61 may alternately move between the adsorption area A1 and the attachment area A2 by the transfer portion 65.

In the present embodiment, the adsorption portion 61 may be configured to rotate through the transfer portion 65. For example, the adsorption portion 61 may be rotated by a predetermined angle based on a rotation axis P of the transfer portion 65 and disposed in the adsorption area A1 or the attachment area A2. To this end, the transfer portion 65 may include a driving means capable of rotating the adsorption portion 61, such as a motor.

In addition, in the adsorption area A1, the adsorption portion 61 may be disposed above or below the protective film 140, move linearly toward the protective film 140 to adsorb the protective film 140, and then return to the original position thereof. Similarly, in the attachment area, the adsorption portion 61 may be located above or below the battery cell 100, move linearly toward the battery cell 100, attach the protective film 140 to the battery cell 100, and then return to the original position thereof. To this end, the transfer portion 65 may include a driving means which linearly moves the adsorption portion 61, such as a hydraulic or pneumatic cylinder.

The film attaching portion 60 of the present embodiment may be configured such that at least two adsorption portions 61a and 61b are simultaneously located in the adsorption area A1 and the attachment area A2, respectively. In addition, when one adsorption portion 61a (hereinafter, referred to as a first adsorption portion) moves from the adsorption area A1 to the attachment area A2, by driving the transfer portion 65 by rotation, the other adsorption portion 61b (hereinafter, referred to as a second adsorption portion) may be configured to move from the attachment area A2 to the adsorption area A1.

In this case, when the first adsorption portion 61a adsorbs the protective film 140, the second adsorption portion 61b may attach the protective film 140 to the battery cell 100. Therefore, adsorption and attachment of the protective film 140 may be performed simultaneously, thereby reducing the time required for the process.

Meanwhile, in the present embodiment, a case in which one adsorption area A1 and one attachment area A2 are provided is taken as an example, but the present disclosure is not limited thereto, and a plurality of adsorption areas A1 and a plurality of attachment areas A2 may also be provided, as required.

Hereinafter, a method of attaching the protective film 140 to the battery cell 100 using the apparatus for attaching a film 1 according to an embodiment of the present disclosure will be described in its entirety.

Referring to FIG. 1, first, the first tape T1 is supplied from the first supply roll 11a toward the tape connection portion 20. In this case, the second supply roll (11b) does not operate.

The first tape T1 that has passed the tape connection portion 20 supports guide rollers 70 and is supplied toward the tape cutting portion 30.

When the first tape T1 is disposed on the fixing device 40 of the tape cutting portion 30, a process for attaching a film is performed. Referring to FIGS. 3A and 3B, the fixing moving portion 50 first moves toward the fixing device 40, grips one end of the tape T, and returns to the original position thereof while the tape T is gripped. Accordingly, the tape T is disposed in the adsorption area (A1 in FIG. 4), which is a space between the fixing device 40 and the fixing moving portion 50.

Subsequently, as shown in FIG. 3C, a tape adsorption process in which the first adsorption portion 61a of the film attaching portion 60 adsorbs the tape T located in the adsorption area A1 may be performed. In this process, the rotation pressing portion 32 adsorbs the tape T, and the tape T is fixed to be engaged between the rotation pressing portion 32 and the first base 31a.

Subsequently, as shown in FIG. 3D, a tape cutting process in which the second cutter 35 moves toward the tape T and cuts the tape T1 is performed. Accordingly, the tape T is formed of a protective film 140 of a size that can be attached to the battery cell 100.

Subsequently, a transfer process of transferring the first adsorption portion 61a to the attachment area A2 is performed. As shown in FIG. 4, the first adsorption portion 61a may be transferred to the attachment area A2 by driving the transfer portion 65 by rotation.

Meanwhile, simultaneously, the above-described tape pulling process (FIGS. 3a, 3b) in which the fixed moving portion 50 grips the end of the tape T and pulls the tape T out of the fixing device 40 may be performed. Accordingly, when the first adsorption portion 61a is located in the attachment area A2, the tape T may be disposed again in the adsorption area A1.

When the first adsorption portion 61a is located in the attachment area A2, a process of attaching the protective film 140 adsorbed to the first adsorption portion 61a to the battery cell 100 may be performed. The transfer portion 65 may move the first adsorption portion 61a toward the battery cell 100, and thus the protective film 140 may contact the battery cell 100 and may be attached to a weld zone of the battery cell 100.

At the same time, the tape adsorption process and the tape cutting process shown in FIGS. 3C and 3D may be performed in the adsorption area A1. Here, the tape adsorption process can be performed through the second adsorption portion 61b.

Subsequently, when the protective film 140 is attached to the battery cell 100, the first adsorption portion 61a returns to the original position thereof, and a process in which the second adsorption portion 61b to which the protective film 140 is adsorbed, is transferred and the protective film 140 is attached, is repeatedly performed.

Meanwhile, in the process of repeatedly performing the attachment process, when it is determined that the first tape T1 wound around the first supply roll 11a is almost exhausted through a sensor S, a process of connecting the second tape T2 to the first tape T1 may be performed.

Specifically, when it is confirmed that the first tape T1 is exhausted, as shown in FIG. 2B, at least one of the first support portion 21a and the second support portion 21b may move in a direction, toward each other, and thus the first tape T1 and the second tape T2 may contact each other, and be bonded to each other.

When the first tape T1 and the second tape T2 are bonded to each other, as shown in FIG. 2C, the first cutter 25 cuts the first tape T1 located between the first supply roll 11a and the support portion 21. Subsequently, as shown in FIG. 2D, when the first support portion 21a and the second support portion 21b return to the original positions thereof, the second tape T2 connected to the first tape T1 may be supplied toward the battery cell 100. In this case, a portion in which the first tape T1 and the second tape T2 are bonded may be discarded from the tape cutting portion 30.

Meanwhile, while the second tape T2 is supplied from the second supply roll 11b, the first supply roll 11a does not operate. Therefore, the operator can replace the first supply roll 11a with a new supply roll 11 while the tape T is supplied from the second supply roll 11b.

Since the film attaching apparatus according to an embodiment of the present disclosure configured in this manner does not need to stop the film attachment process to replace the supply roll when the tape supplied from the supply roll is exhausted, manufacturing time may be reduced and process efficiency may be improved.

In addition, the adsorption and attachment of the protective film can be performed simultaneously, thereby reducing the time required for the process.

While example embodiments have been illustrated and described above, it will be apparent to those skilled in the art that modifications and variations could be made without departing from the scope of the present disclosure as defined by the appended claims.

## Claims

1. A film attaching apparatus, comprising:
a tape supply portion selectively supplying first tape provided on a first supply roll and second tape provided on a second supply roll;
a tape cutting portion cutting the first tape or the second tape to a predetermined size;
a film attaching portion attaching a protective film formed by cutting the first tape or the second tape to a battery cell; and
a tape connection portion connecting the first tape and the second tape, when one of the first tape and the second tape is exhausted.

2. The film attaching apparatus of claim 1, wherein the tape connection portion comprises a first support portion and a second support portion disposed to be spaced apart from each other by a predetermined distance,
the first tape and the second tape are disposed to pass between the first support portion and the second support portion, and
when any one of the first tape and the second tape is exhausted, the first support portion and the second support portion move in a direction, toward each other, to bond the first tape and the second tape to each other.

3. The film attaching apparatus of claim 2, further comprising:
a cutter cutting the exhausted tape of the first tape and the second tape, when the first tape and the second tape are bonded to each other.

4. The film attaching apparatus of claim 1, comprising:
a plurality of guide rollers supporting the first tape or the second tape and maintaining tension of the first tape or the second tape.

5. The film attaching apparatus of claim 1, further comprising:
a sensor sensing a remaining amount of the first tape on the first supply roll.

6. The film attaching apparatus of claim 1, wherein the tape connection portion is disposed between the tape supply portion and the tape cutting portion.

7. The film attaching apparatus of claim 1, wherein the tape cutting portion comprises
a fixing device supporting the tape supplied from the tape supply portion;
a fixing moving portion disposed to enable linear movement toward the fixing device and pulling out the tape disposed on the fixing device to the outside of the fixing device by a predetermined distance; and
a cutter disposed between the fixing device and the fixing moving portion to cut the tape.

8. The film attaching apparatus of claim 7, wherein, when the tape is pulled out by the fixing moving portion by a predetermined distance,
the fixing device presses the tape and suppresses the movement of the tape.

9. The film attaching apparatus of claim 7, wherein the fixing moving portion comprises a gripping unit formed in the shape of pincers and gripping the tape.

10. The film attaching apparatus of claim 7, wherein the film attaching portion comprises
an adsorption portion adsorbing the protective film and attaching the protective film to the battery cell; and
a transfer portion disposing the absorption portion between the fixing device and the fixing moving portion or disposing the absorption portion to face the battery cell.

11. The film attaching apparatus of claim 10, wherein the adsorption portion comprises a first adsorption portion and a second adsorption portion disposed to be spaced apart from each other by a predetermined distance, and
when the first adsorption portion is disposed between the fixing device and the fixing moving portion, the transfer portion disposes the second adsorption portion to face the battery cell.

12. The film attaching apparatus of claim 11, wherein, when the first adsorption portion adsorbs the protective film, the second adsorption portion attaches the pre-adsorbed protective film to the battery cell.
